# EUROPÄISCHE PATENTSCHRIFT

(11) **EP 0 732 791 B1**
(45) Veröffentlichungstag und Bekanntmachung des Hinweises auf die Patenterteilung: **08.04.1998**
(21) Anmeldenummer: 96103513.6
(22) Anmeldetag: 07.03.1996
(51) Int. Cl.: H02G 15/068

(54) **Vorrichtung zur Ausübung eines Druckes auf einen elastischen Feldsteuerkonus**
Device for exerting a pressure on a resilient stress control cone
Dispositif pour exercer une pression sur un cône de contrainte élastique

(30) Priorität: 13.03.1995 DE 19508975
(43) Veröffentlichungstag der Anmeldung: 18.09.1996
(73) Patentinhaber: ABB PATENT GmbH, 68309 Mannheim (DE)
(72) Erfinder: Lorenz, Dietmar, 68163 Mannheim (DE); Rudolph, Olaf, 76707 Hambrücken (DE); Stahl, Peter, 67122 Altrip (DE)
(74) Vertreter: Rupprecht, Klaus, Dipl.-Ing.

(56) Entgegenhaltungen:
- EP-A- 0 140 269
- DE-A- 2 609 078
- DE-A- 4 239 648
- IEEE TRANSACTIONS ON POWER DELIVERY, Bd. 6, Nr. 2, 1.April 1991, Seiten 471-478, XP000226607 TETSUO AKIYAMA ET AL: "DEVELOPMENT OF PREFABRICATED JOINT FOR 154 KV XLPE CABLE"

## Beschreibung

Die Erfindung betrifft eine Vorrichtung nach dem Oberbegriff des Anspruchs 1.

Kabelgarnituren für Hochspannungen werden um so voluminöser, je höher die zu beherrschende Spannung ist, da die zum Einsatz gelangenden Isolierteile entsprechend große Wandstärken aufweisen müssen. Große Volumina führen bei Temperaturschwankungen zwangsläufig zu relativ großen Volumenänderungen und dadurch zu Problemen an Grenzflächen zwischen Teilen aus unterschiedlichem Material.

Bekannte Kabelgarnituren, insbesondere solche für Steckendverschlüsse, besitzen einen zu einer Steckbuchse gehörigen starren Isolierkörper, in den der Steckendverschluß mit seinem elastischen, unter Druck verformbaren Feldsteuerkonus einsteckbar ist. Mit Hilfe eines auf den Feldsteuerkonus wirkenden Druckschiebers wird ein an der Grenzfläche zwischen Isolierkörper und Feldsteuerkonus elektrisch notwendiger Mindestdruck erzeugt. Der Druck wird andererseits dadurch begrenzt, daß der kabelseitig auftretende Anpreßdruck materialbedingt einen noch zulässigen Maximalwert nicht überschreiten darf.

Bei Temperaturänderungen der Kabelgarnitur kommt es durch Volumenänderungen des Feldsteuerkonus einerseits und der Kabelisolation andererseits zu einer Verschiebung des Druckschiebers in Richtung der Kabelachse, die mit wachsender Baugröße bis zu mehreren Millimetern betragen kann. Diese axiale Verschiebung muß durch die Druckvorrichtung aufgefangen werden, ohne daß es zu einem unzulässigen Druckanstieg auf der Kabeloberfläche oder einem unzulässigen Druckabfall an den Grenzflächen kommt. Mit Spiralfedern aufgebaute Druckvorrichtungen bedürfen hierbei wegen ihres linearen Federverhaltens eines langgestreckten konstruktiven Aufbaus.

Aus der DE 42 39 648 ist eine Steckverbindungseinrichtung für Kabel bekannt, bei der zur Druckvorrichtung ein Druckschieber gehört, dessen der Steckbuchse zugewandtes Ende auf eine Schulter des Feldsteuerkonus drückt und auf dessen Stirnseite am anderen Ende eine Spiralfeder sitzt, die sich an einer Ringschulter eines Gehäuses abstützt, das ortsfest im Bereich einer Wanddurchführung befestigt ist. Bei einer größeren, für höhere Spannungen ausgelegten Steckverbindung müßte eine wesentlich längere Spiralfeder gewählt werden, um die relativ großen Bewegungen des Druckschiebers bei Temperaturänderungen ohne große Druckänderungen abfangen zu können. Damit würde sich die Baulänge der Steckverbindungseinrichtung deutlich vergrößern, was selbstverständlich unerwünscht ist.

Aufgabe der Erfindung ist es, eine Kabelgarnitur nach dem Oberbegriff des Anspruchs 1 zu schaffen, deren Aufbau so gestaltet ist, daß ihre axiale Länge möglichst klein gehalten werden kann.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Die axiale Baulänge der Vorrichtung läßt sich erfindungsgemäß dadurch gegenüber einem Aufbau mit Spiralfedern deutlich verringern, daß die Federanordnung ein oder mehrere Federpakete (10) umfaßt, die jeweils aus säulenartig gestapelten Tellerfedern bestehen, und daß die Federanordnung sowie die mit ihr zusammenwirkenden Bauteile so dimensioniert sind, daß ihr Arbeitsbereich in den Bereich degressiver Steigung ihrer nichtlinearen Kennlinie fällt. Da in diesem Bereich die Kennlinie relativ flach verläuft, führen Bewegungen des Druckschiebers nur zu verhältnismäßig geringen Druckänderungen. Die Federpakete können deshalb wesentlich kürzer als vergleichbare Spiralfedern gestaltet werden.

Vorteilhaft ist es, die Federpakete jeweils so aufzubauen, daß die Tellerfedern auf einem Führungsdorn gestapelt sind, an dessen einem Ende sie durch einen Haltekopf und an dessen anderem Ende durch eine Spannhülse fixiert sind. Die Spannhülse wird dabei von einer in den Führungsdorn geschraubten Halteschraube gegen die aufgestapelten Tellerfedern gepreßt. Die Halteschraube liegt mit ihrem Kopf so tief in der Spannhülse, daß dieser bei einem Druck auf das freie Ende der Spannhülse in ihr gleiten kann.

Eine wesentliche Weiterbildung des Erfindungsgegenstandes sieht vor, daß innerhalb der hülsenartigen Wandung des Druckschiebers mindestens eine Kammer mit einer dem Druckaufnahmeteil zugewandten Öffnung vorgesehen und so gestaltet sind, daß sie mindestens einen Teil der sich in Kabelrichtung erstreckenden Federanordnung aufnimmt. Je weiter die Federanordnung in den Druckschieber eintaucht, um so stärker vermindert sich die Baulänge, wobei eine aus konstruktiven Gründen erforderliche Mindestlänge des Druckschiebers vorausgesetzt wird.

Eine weitere Verbesserung der Anordnung ist dadurch zu erreichen, daß der Druckschieber aus leitfähigem Material, vorzugsweise aus Metall, besteht und einen in den Feldsteuerkonus eingebetteten Steuertrichter kontaktiert und damit zusätzliche elektrische Verbindungen erspart. Durch diese Materialwahl soll gleichzeitig auch eine gute Wärmeleitfähigkeit sichergestellt werden, die eine schnelle Ableitung im Kabelbereich auftretender Wärme ermöglicht.

Um eine gewünschte Druckverteilung der vom Druckschieber beaufschlagten Flächen zu gewährleisten, ist dieser an seinem dem Feldsteuerkonus zugewandten Ende mit einem Innenkonus versehen, der auf einen entsprechenden Außenkonus des Feldsteuerkonus trifft.

Die Verwendung eines zusammen mit dem Isolierkörper den Druckschieber umschließenden Gehäuses als Druckaufnahmeteil ist schon deshalb zweckmäßig, weil es Schutz vor äußeren Einwirkungen bietet und wie der Isolierkörper im Bereich einer Gerätedurchführung ortsfest montierbar ist.

Eine besonders vorteilhafte Weiterbildung des Erfindungsgegenstandes besteht darin, daß zwischen dem Druckschieber und dem Gehäuse, in dieses eingelegt, ein Zentrierflansch angeordnet ist, der Zentrierzapfen besitzt, mit denen er zur Zentrierung in entsprechende Bohrungen des Druckschiebers eingreift. Mit dieser Anordnung gelingt es mögliche Verkantungen des Gehäuses und daraus resultierende ungleiche Druckkräfte zu vermeiden. Die Zentrierzapfen des Zentrierflansches sorgen für eine sichere Parallelführung.

Das als Druckaufnehmer dienende Gehäuse hat wichtige elektrische und mechanische Funktionen. Ein besonders einfach aufgebautes Gehäuse wird dadurch geschaffen, daß dieses aus einem ersten Rohrstück mit größerem und einem zweiten Rohrstück mit kleinerem Durchmesser zusammengesetzt ist und ein mit beiden Rohrstücken verschweißter und/oder verlöteter Führungsflansch für deren Verbindung sorgt. Das dem Isolierkörper zugewandte Ende des ersten Rohrstücks ist mit einem Gehäuseflansch verschweißt und/oder verlötet und kann mit diesem am Rahmen einer Gehäuseöffnung befestigt werden.

Vorrichtungen der beschriebenen Art können als Endverschlüsse oder als Muffen aufgebaut sein. Eine besondere Bedeutung hat dabei eine Vereinheitlichung ihres Aufbaus. Diese wird in Weiterbildung des Erfindungsgegenstandes dadurch erreicht, daß im wesentlichen gleichartige Teile zum Einsatz gelangen. Hierzu gehört ein elastischer Feldsteuerkonus, ein Druckschieber, eine Federanordnung und ein Gehäuse. Bei einem Endverschluß wird eine einzelne und bei einer Muffe werden zwei derartige Anordnungen benötigt.

Um eine komfortablere Montage der Kabelgarnitur zu ermöglichen, ist vorgesehen, daß die Federanordnung vorgespannt ist.

Ausführungsbeispiele der Erfindung sind in den Zeichnungen dargestellt und werden im folgenden näher beschrieben. Es zeigen:
- Fig. 1: eine als Steckendverschluß ausgeführte Kabelgarnitur seitlich im Schnitt als Zusammenstellungszeichnung,
- Fig. 2: einen Feldsteuerkonus seitlich im Schnitt,
- Fig. 3: eine Druckvorrichtung seitlich im Schnitt,
- Fig. 4: ein Federpaket seitlich im Schnitt,
- Fig. 5: einen Druckschieber in Draufsicht auf eine Stirnfläche,
- Fig. 6: den Druckschieber nach Fig. 5 seitlich im Schnitt.

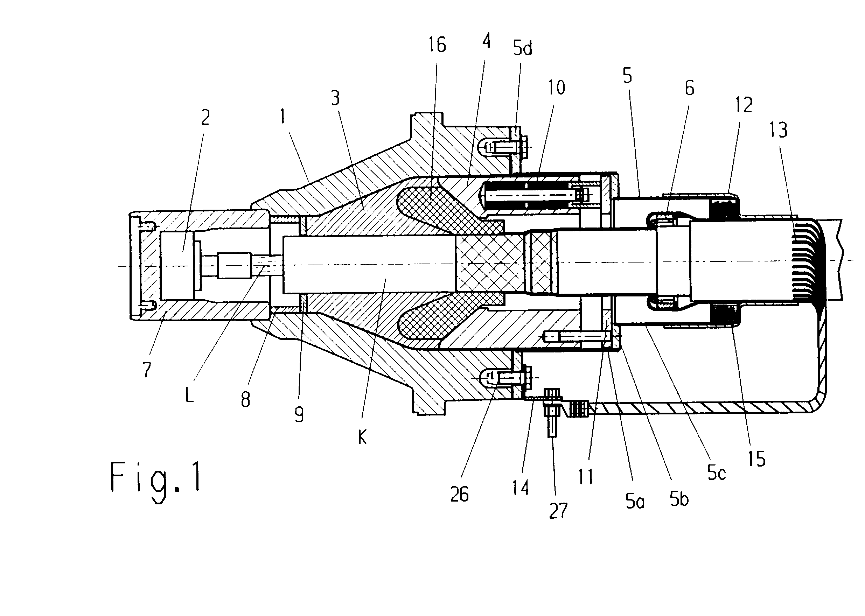

Die in Fig. 1 dargestellte Kabelgarnitur besteht aus einem Steckendverschluß, der in eine Steckbuchse eingesteckt ist, zu der ein Isolierkörper 1 und eine Kopfarmatur 7 gehören. Die Steckbuchse wird üblicher Weise an der Wand eines elektrischen Gerätes, z.B. einer Schaltanlage, angebracht und ragt dann durch eine Öffnung in der Wand in das Innere des Gerätes. Der von außen in die Steckbuchse eingesteckte Steckendverschluß umschließt konzentrisch ein Kabel K. Am freien Ende des Kabels K ist sein abisolierter Leiter L mit einem Leiterabschlußstück 2 verbunden, das für eine Kontaktierung in der Kopfarmatur 7 der Steckbuchse sorgt.

Im Anschluß an eine Druckplatte 9, die sich an einer Distanzhülse 8 abstützt, ist ein rotationssymmetrischer, aus Silikonkautschuk bestehender Feldsteuerkonus 3 über das Kabel K geschoben. Dieser Feldsteuerkonus 3 bildet in beiden Richtungen zur Achse des Kabels K einen Außenkonus. Auf den nach außen weisenden Außenkonus wirkt ein zu einer Druckvorrichtung gehöriger Druckschieber 4 mit einem entsprechend angepaßten Innenkonus. Ein so auf den Feldsteuerkonus 3 ausgeübter Druck sorgt dafür, daß sein nach innen in die Steckbuchse weisender Außenkonus an einen entsprechenden Innenkonus des Isolierkörpers 1 gepreßt wird.

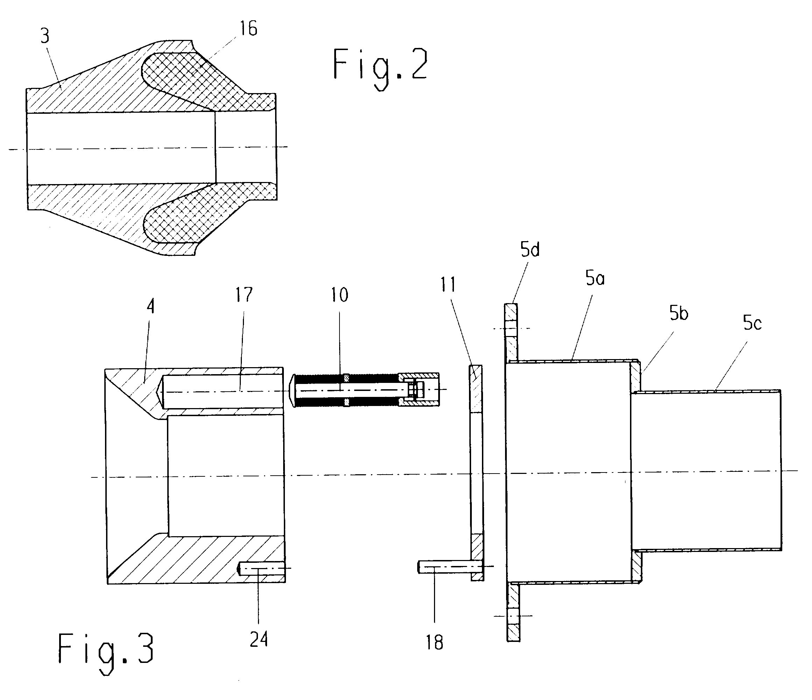

Wie auch Fig. 2 zeigt, ist in den Feldsteuerkonus 3 ein Steuertrichter 16 so eingegossen, daß er einen Teil der Druckfläche bildet, auf die der Innenkonus des Druckschiebers 4 wirkt. Da dieser aus Metall besteht, ermöglicht er eine Kontaktierung des Steuertrichters 16 und eine Anbindung an das Erdpotential. Gleichzeitig sorgt er für eine gute Wärmeableitung aus der Steckbuchse heraus nach außen.

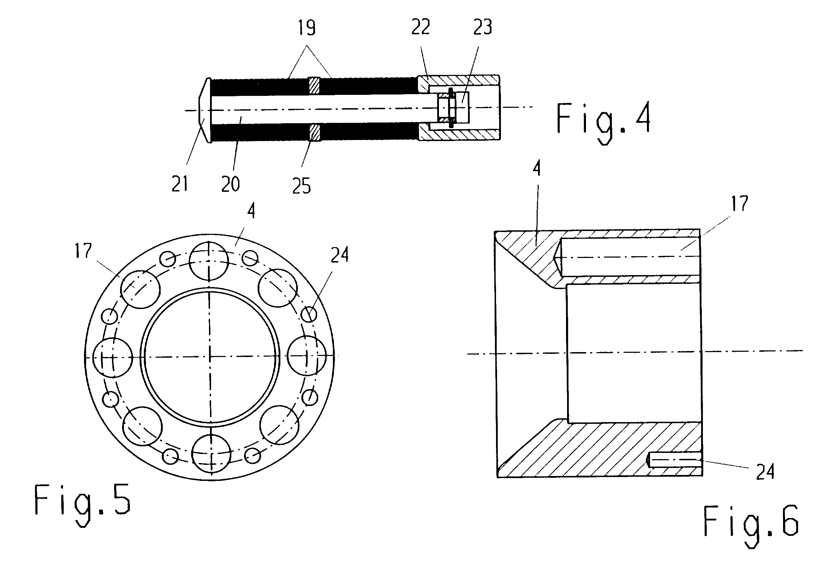

Die außer dem Druckschieber 4 zur Druckvorrichtung gehörigen weiteren Teile sind in einer Montagestellung in Fig. 3 dargestellt. Wie ergänzend die Fig. 5 und 6 erkennen lassen, sind in dem Hülsenkörper des Druckschiebers 4 in gleichem Abstand zueinander mehrere zylindrische Kammern 17 ausgespart, in die zu einer Federanordnung 10 gehörige Federpakete eingesteckt sind. Die Federpakete können sich in einem Gehäuse 5 abstützen, das mit Gehäuseschrauben 26 am Isolierkörper 1 befestigt ist.

Die konische Ausbildung der Druckflächen gewährleistet eine ganz gezielte Druckverteilung, mit der ein Mindestdruck an den Grenzflächen und ein Höchstdruck an der Kabelisolierung eingehalten werden soll. Um eine gleichmäßige Druckbeaufschlagung sicherzustellen, ist zwischen das Gehäuse 5 und die Federanordnung 10 ein Zentrierflansch 11 eingefügt, der mit Zentrierzapfen 18 versehen ist, die in angepaßte Bohrungen 24 des Druckschiebers 4 eingreifen und auch bei Bewegungen des Druckschiebers 4 für einen exakten Parallellauf sorgen, so daß alle Federpakete der Federanordnung 10 einen gleichmäßigen Druck erzeugen können.

Ein möglicher Aufbau des Federpaketes ist noch einmal in Fig. 4 vergrößert dargestellt. Auf einen mit einem Haltekopf 21 versehenen Führungsdorn 20 sind Tellerfedern 19 so aufgestapelt und in der Mitte des Führungsdorns 20 durch eine Führungsscheibe 25 so getrennt, daß sich eine Federkennlinie mit degressiver Steigung ergibt. An seinem dem Haltekopf 21 gegenüberliegenden Ende ist eine Spannhülse 22 auf den Führungsdorn 20 aufgeschoben, die von einer in den Führungsdorn 20 eingeschraubten Halteschraube 23 unter Vorspannung gegen die Tellerfedern 19 gedrückt wird. Der Kopf der Halteschraube 23 liegt so tief in der Spannhülse 22 in der er sich an einem inneren Kragen abstützen kann, daß er sich bei einem auf die Spannhülse 22 von außen über den Zentrierflansch 11 ausgeübtem Druck in ihr bewegen kann. Wie in Fig. 1 ersichtlich, sind die Teile der Druckvorrichtung so dimensioniert, daß sich der Kopf 21 bei Nenntemperatur etwa in der Mitte der Spannhülse 22 befindet und sich somit in beiden Richtungen bewegen kann. Der zugehörige auf der Kennlinie der Federanordnung 10 liegende Arbeitspunkt ist in einen Bereich relativ geringer Steilheit gelegt.

Das Gehäuse 5 ist einfach und entsprechend kostengünstig aufgebaut. Es besteht aus zwei Rohrstücken 5a,5c mit unterschiedlichem Durchmesser, die über einen Führungsflansch 5b miteinander verbunden sind. Am freien Ende eines mit größerem Durchmesser versehenen ersten Rohrstücks 5a ist ein Gehäuseflansch 5d angeschweißt, durch den das Gehäuse 5 am Isolierkörper 1 befestigt werden kann.

Ein Schirm 13 des Kabels K ist mit Hilfe einer Klemmschraube 27 an einen Erdanschlußwinkel 14 gelegt, der seinerseits durch die Gehäuseschrauben 26 mit dem Gehäuse 5 verbunden ist. Die weiterhin in Fig.1 erkennbare Schichtenmantelkontaktierung 6, die Zentrierwinkel 12 und ein Schrumpfschlauch 15 sind für die Erfindung ohne Bedeutung.

### Bezugszeichenliste

Isolierkörper (1)
Leiterabschlußstück (2)
Feldsteuerkonus (3)
Druckschieber (4)
Gehäuse (5)
erstes Rohrstück (5a)
zweites Rohrstück (5c)
Führungsflansch (5b)
Gehäuseflansch (5d)
Schichtenmantelkontaktierung (6)
Kopfarmatur (7)
Distanzhülse (8)
Druckplatte (9)
Federanordnung (10)
Zentrierflansch (11)
Zentrierwinkel (12)
Schirm (13)
Erdanschlußwinkel (14)
Schrumpfschlauch (15)
Steuertrichter (16)
Kammer (17)
Zentrierzapfen (18)
Tellerfedern (19)
Führungsdorn (20)
Haltekopf (21)
Spannhülse (22)
Halteschraube (23)
Bohrungen (24)
Führungsscheibe (25)
Gehäuseschrauben (26)
Klemmschraube (27)
Kabel (K)
Leiter (L)

## Patentansprüche

1. Vorrichtung zur Ausübung eines Druckes, insbesondere auf einen elastischen Feldsteuerkonus (3) einer Kabelgarnitur, bestehend aus einem Druckschieber (4), einer Federanordnung (10), einem Druckaufnahmeteil (11) und einem Isolierkörper (1), wobei der Druckschieber (4) zum hülsenartigen Umschließen des Kabels geeignet ist und die mindestens eine Druckfeder umfassende Federanordnung (10) sich zwischen dem Druckschieber (4) und dem Druckaufnahmeteil (11) abstützt, das entsprechend einem zum Aufnehmen eines Feldsteuerkonus (3) geeigneten Isolierkörper (1) ortsfest in seiner Lage gehalten ist, dadurch gekennzeichnet, daß die Federanordnung ein oder mehrere Federpakete (10) umfaßt, die jeweils aus säulenartig gestapelten Tellerfedern bestehen, und daß die Federanordnung sowie die mit ihr zusammenwirkenden Bauteile so dimensioniert sind, daß ihr Arbeitsbereich in den Bereich degressiver Steigung ihrer nichtlinearen Kennlinie fällt.

2. Vorrichtung nach Anspruch 1, dadurch gekennzeichnet, daß die Tellerfedern (19) auf einem Führungsdorn (20) gestapelt sind, an dessen einem Ende sie durch einen Haltekopf (21) und an dessen anderem Ende sie durch eine Spannhülse (22) fixiert sind, wobei die Spannhülse (22) von einer in den Führungsdorn (20) geschraubten Halteschraube (23) gegen die aufgestapelten Tellerfedern (19) gepreßt sind und die Halteschraube (23) so tief in der Spannhülse (22) liegt, daß ihr Kopf bei einem Druck auf das freie Ende der Spannhülse (22) in ihr gleiten kann.

3. Vorrichtung nach einem der vorhergehenden Ansprüche, dadurch gekennzeichnet, daß innerhalb der hülsenartigen Wandung des Druckschiebers (4) eine oder mehrere Kammern (17) mit einer dem Druckaufnahmeteil (5,11) zugewandten Öffnung vorgesehen und so gestaltet sind, daß sie mindestens einen Teil der sich in Kabelrichtung erstreckenden Federanordnung (10) aufnehmen.

4. Vorrichtung nach Anspruch 3, dadurch gekennzeichnet, daß der Druckschieber (4) aus leitfähigem Material, vorzugsweise aus Metall, besteht und zur Kontaktierung eines in den Feldsteuerkonus (3) eingebetteten Steuertrichters (16) geeignet ist.

5. Vorrichtung nach einem der vorhergehenden Ansprüche, dadurch gekennzeichnet, daß der Druckschieber (4) an einem Ende mit einem Innenkonus versehen ist, der geeignet ist, auf einen entsprechenden Außenkonus des Feldsteuerkonus (3) zu treffen.

6. Vorrichtung nach einem der vorhergehenden Ansprüche, dadurch gekennzeichnet, daß als Druckaufnahmeteil ein den Druckschieber (4) zusammen mit dem Isolierkörper (1) umschließendes Gehäuse (5) dient.

7. Vorrichtung nach Anspruch 6, dadurch gekennzeichnet, daß zwischen dem Druckschieber (4) und dem Gehäuse (5), in dieses eingelegt, ein Zentrierflansch (11) angeordnet ist, der Zentrierzapfen (18) besitzt, mit denen er zur Zentrierung in entsprechende Bohrungen (24) des Druckschiebers (4) eingreift.

8. Vorrichtung nach einem der vorhergehenden Ansprüche 6 oder 7, dadurch gekennzeichnet, daß das metallene Gehäuse (5) als Gußteil hergestellt ist oder aus einem ersten Rohrstück (5a) und einem zweiten Rohrstück (5c) mit kleinerem Durchmesser zusammengesetzt ist und ein mit beiden Rohrstükken verschweißter und/oder verlöteter Führungsflansch (5b) für deren Verbindung sorgt und das dem Isolierkörper (1) zugewandte Ende des ersten Rohrstücks (5a) mit einem Gehäuseflansch (5d) verschweißt und/oder verlötet ist.

9. Vorrichtung nach einem der vorhergehenden Ansprüche, dadurch gekennzeichnet, daß die Federanordnung (10) vorgespannt ist.

10. Verwendung einer Vorrichtung nach einem der vorhergehenden Ansprüche zusammen mit einem Feldsteuerkonus (3) und einem Gehäuse (5) bei einem Endverschluß oder einer Muffe.

## Claims

1. Device for exerting a pressure, in particular on a resilient stress control cone (3) of a cable fitting, comprising a pressure slider (4), a spring arrangement (10), a pressure-absorbing part (11) and an insulating element (1), the pressure slider (4) being suitable for enclosing the cable like a sleeve, and the spring arrangement (10), comprising at least one compression spring, being supported between the pressure slider (4) and the pressure-absorbing part (11) which is held in its position in a stationary manner corresponding to an insulating element (1) suitable for accommodating a stress control cone (3), characterized in that the spring arrangement comprises one or more spring packs (10) which each consist of disc springs stacked like a column, and in that the spring arrangement and the components interacting with it are dimensioned such that their working range falls into the range of degressive slope of their nonlinear characteristic curve.

2. Device according to Claim 1, characterized in that the disc springs (19) are stacked on a guide mandrel (20) at one end of which they are fixed by a retaining head (21) and at the other end of which they are fixed by a clamping sleeve (22), the clamping sleeve (22) being pressed against the stacked-up disc springs (19) by a retaining screw (23) screwed into the guide mandrel (20), and the retaining screw (23) being located so deep in the clamping sleeve (22) that, in the event of pressure on the free end of the clamping sleeve (22), the head of the said retaining screw (23) can slide into the clamping sleeve (22).

3. Device according to one of the preceding claims, characterized in that, inside the sleeve-like wall of the pressure slider (4), one or more chambers (17) having an opening facing the pressure-absorbing part (5,11) are provided and configured in such a way that they accommodate at least part of the spring arrangement (10) extending in the cable direction.

4. Device according to Claim 3, characterized in that the pressure slider (4) consists of conductive material, preferably of metal, and is suitable for making contact with a control funnel (16) embedded in the stress control cone (3).

5. Device according to one of the preceding claims, characterized in that the pressure slider (4) is provided at one end with an internal cone which is suitable to encounter a corresponding external cone on the stress control cone (3).

6. Device according one of the preceding claims, characterized in that the pressure-absorbing part used is a housing (5) enclosing the pressure slider (4) together with the insulating element (1).

7. Device according to Claim 6, characterized in that there is arranged, between the pressure slider (4) and the housing (5), inserted into the latter, a centring flange (11) which has centring pins (18) with which it engages in corresponding bores (24) in the pressure slider (4) for the purpose of centring.

8. Device according to one of the preceding Claims 6 or 7, characterized in that the metal housing (5) is produced as a casting or is composed of a first tubular piece (5a) and a second tubular piece (5c) with a smaller diameter, and a guide flange (5b), welded and/or soldered to the two tubular pieces, ensuring their connection, and that end of the first tubular piece (5a) facing the insulating element (1) being welded and/or soldered to a housing flange (5d).

9. Device according to one of the preceding claims, characterized in that the spring arrangement (18) is prestressed.

10. Use of a device according to one of the preceding claims together with a stress control cone (3) and a housing (5) in the case of an entry fitting or of a sleeve.

## Revendications

1. Dispositif pour exercer une pression, notamment sur un cône de contrainte (3) élastique d'un accessoire de raccordement de câble, comportant un élément de pression (4), un système de ressorts (10), un élément d'appui (11) et un corps isolant (1), l'élément de pression (4) étant adapté pour entourer le câble à la manière d'un manchon, le système de ressorts (10) comportant au moins un ressort de compression étant disposé entre le l'élément de pression (4) et l'élément d'appui (11) qui est maintenu stationnaire dans sa position par rapport au corps isolant (1) adapté pour recevoir un cône de contrainte (3), caractérisé par le fait que le système des ressorts comporte un ou plusieurs paquets de ressorts (10) qui sont constitués chacun de rondelles-ressorts empilées en colonnettes et par le fait que le système de ressorts ainsi que les éléments qui coopèrent avec celui-ci sont dimensionnés de façon à ce que la zone de travail du système de ressorts se situe dans la partie à pente dégressive de sa courbe caractéristique non linéaire.

2. Dispositif selon la revendication 1, caractérisé par le fait que les rondelles-ressorts (19) sont empilées sur un axe de guidage (20) et sont tenues à une extrémité de celui-ci par une tête (21) et à l'autre extrémité par une douille de serrage (22), la douille de serrage (22) étant pressée contre les rondelles-ressorts (19) empilées au moyen d'une vis de retenue (23) vissée dans l'axe de guidage (20) et la vis de retenue (23), dans la douille de serrage (22), étant située à une profondeur telle qu'en présence d'une pression sa tête peut coulisser en direction de l'extrémité libre de la douille de serrage (22), dans ladite douille de serrage.

3. Dispositif selon une des revendications précédentes, caractérisé par le fait qu'il est prévu dans la paroi de l'élément de pression (4) en forme de manchon, une ou plusieurs chambres (17) pourvues d'une ouverture tournée vers l'élément d'appui (5, 11) qui sont conformées de manière à recevoir au moins une partie du système de ressorts (10) s'étendant dans la direction du câble.

4. Dispositif selon la revendication 3, caractérisé par le fait que l'élément de pression (4) est réalisé en un matériau conducteur, de préférence en métal, et est conformé pour assurer le contact avec un entonnoir de contrainte (16) inséré dans le cône de contrainte (3).

5. Dispositif selon une des revendications précédentes, caractérisé par le fait que l'élément de pression (4) est pourvu à une extrémité d'un cône intérieur adapté pour venir en contact avec un cône extérieur correspondant du cône de contrainte (3).

6. Dispositif selon une des revendications précédentes, caractérisé par le fait qu'un boîtier (5) qui entoure l'élément de pression (4) et le corps isolant (1) sert d'élément d'appui.

7. Dispositif selon la revendication 6, caractérisé par le fait qu'une bride de centrage (11) insérée dans le boîtier (5) est disposée entre l'élément de pression (4) et ledit boîtier (5), laquelle bride de centrage est pourvue d'axes de centrage (18) par l'intermédiaire desquels elle s'engage dans des perçages (24) adaptés de l'élément de pression (4) à des fins de centrage.

8. Dispositif selon une des revendications précédentes 6 ou 7, caractérisé par le fait que le boîtier (5) métallique est réalisé sous forme de pièce moulée ou est formé d'un premier tronçon de tube (5a) et d'un deuxième tronçon de tube (5c) de diamètre plus faible, une bride de guidage (5b) soudée et/ou brasée sur les deux tronçons de tube assurant la liaison entre ces deux éléments et l'extrémité du premier tronçon de tube (5a) tournée vers le corps isolant (1) étant soudée et/ou brasée sur une bride du boîtier (5d).

9. Dispositif selon une des revendications précédentes, caractérisé par le fait que le système de ressorts (10) est précontraint.

10. Utilisation d'un dispositif selon une des revendications précédentes avec un cône de contrainte (3) et un boîtier (5) dans une extrémité de câble ou un manchon de jonction.
